# EUROPÄISCHE PATENTSCHRIFT

(11) **EP 3 291 716 B1**
(45) Veröffentlichungstag und Bekanntmachung des Hinweises auf die Patenterteilung: **17.04.2019**
(21) Anmeldenummer: 16722835.2
(22) Anmeldetag: 04.05.2016
(51) Int. Cl.: A47J 31/44

(54) **GETRÄNKEZUBEREITUNGSMASCHINE**
MACHINE FOR MAKING BEVERAGES
MACHINE DE PRÉPARATION DE BOISSONS

(30) Priorität: 06.05.2015 EP 15166658
(43) Veröffentlichungstag der Anmeldung: 14.03.2018
(73) Patentinhaber: Qbo Coffee GmbH, 8304 Wallisellen (CH)
(72) Erfinder: KRUG, Jörg, 35239 Steffenberg (DE); TERBORG, Marion, 59939 Olsberg (DE)
(74) Vertreter: Frei Patent Attorneys
(86) Internationale Anmeldenummer: PCT/EP2016/059950
(87) Internationale Veröffentlichungsnummer: WO 2016/177759

(56) Entgegenhaltungen:
- EP-A2- 1 903 519
- WO-A1-2007/019993
- DE-U1-202010 010 770

## Beschreibung

Die Erfindung betrifft das Gebiet der Maschinen zum Zubereiten von Getränken, insbesondere Heissgetränken, aus Wasser und einem Extraktionsgut oder Extrakt. Sie betrifft insbesondere eine Getränkezubereitungsmaschine, bspw. Kaffeemaschine, mit einem Wassertank und einem Füllstandsensor mit Schwimmer im Wassertank.

Maschinen zum Zubereiten von Getränken oder dergleichen aus einem in einer Portionsverpackung oder lose vorhandenen Extraktionsgut sind unter anderem als Kaffee- oder Espressomaschinen bekannt. In Kapselsystemen sind die Portionsverpackungen als Kapseln ausgebildet, in denen das Extraktionsgut bspw. luftdicht abgeschlossen ist. Für die Extraktion wird die Kapsel in eine Brühkammer befördert und angestochen, beispielsweise an zwei einander gegenüberliegenden Seiten. Auf der ersten Seite wird dann eine Extraktionsflüssigkeit heisses Wasser eingeleitet. Auf der zweiten Seite wird das Extraktionsprodukt aus der Kapsel ausgeleitet. Ähnlich funktionieren Teemaschinen oder Kaffee-Vollautomaten, bei denen zunächst der Kaffee gemahlen und dann das entstandene Pulver lose in die Brühkammer eingebracht wird.

Die meisten Getränkezubereitungsmaschinen dieser Art weisen einen Wassertank (Wasserbehälter) auf, welcher mit einem Wasservorrat befüllt wird und aus welchem für die Getränkezubereitung Wasser gepumpt wird. Das Wasser wird anschliessend erhitzt, sofern ein Heissgetränk gebrüht werden soll, und oft unter Druck durch das Extraktionsgut oder allenfalls Extrakt gepresst, worauf es in ein Trinkgefäss ausfliesst. Im Allgemeinen ist die aus dem Wassertank abgepumpte und für die Getränkezubereitung verwendete Flüssigkeitsmenge portioniert und auf das Volumen des zu brühenden Getränke angepasst; die Portionsgrösse kann je nach Wahl des Getränks durch den Benutzer verschieden sein, bspw. indem der Benutzer wahlweise einen Espresso, eine kleinere Tasse Kaffee oder eine grössere Tasse Kaffee zubereiten kann.

Es ist beispielsweise aus der EP 1 903 519 bekannt, für eine Kaffeemaschine in einem Wassertank einen schwimmenden Magneten anzubringen, welcher in einem Rohr geführt ist und der mit Reedschaltern zusammenwirkt, die auf unterschiedlicher Höhe angeordnet sind und geschlossen werden, wenn sich der Magnet auf ihrer Höhe befindet. Dadurch können zwei verschiedene Wasserstände erkannt werden, beispielsweise ein erster, bei dem noch eine bestimmte Anzahl Tassen gebrüht werden kann und ein zweiter, in welchem der Wasserbehälter im Wesentlichen leer ist und aufgefüllt werden muss.

Bei dieser Lösung gibt es jedoch nur zwei definierte Zustände, bei allen anderen Füllzuständen bleibt die Ansteuerung der Kaffeemaschine ohne Signal. Um dies zu verbessern schlägt EP 1 903 519 die Verwendung mehrerer Reedschalter übereinander vor, was jedoch einen beträchtlichen zusätzlichen Aufwand mit sich bringt.

Ausgehend vom Stand der Technik stellt sich der Erfindung die Aufgabe, eine Getränkezubereitungsmaschine zur Verfügung zu stellen, welche eine verbesserte, möglichst effiziente und konstruktiv einfache Füllstandüberwachung ermöglicht.

Diese Aufgabe wird gelöst durch die Erfindung, wie sie in den Patentansprüchen definiert ist.

Eine Getränkezubereitungsmaschine der erfindungsgemässen Art weist nebst mit einem Wassertank und einer Pumpe, um Wasser zwecks Zubereitung eines Getränks aus dem Wassertank abzupumpen, eine Detektionseinheit auf, welche einen Schwimmer beinhaltet, der im Wassertank entlang einer Bahn bewegbar geführt ist und eine geringere Dichte als das Wasser aufweist, so dass seine Position entlang der Bahn von einem Füllstand im Wassertank abhängt. Weiter besitzt die Getränkezubereitungsmaschine eine Steuerungseinheit, welche eingerichtet ist, abhängig von der Position des Schwimmers ein Signal auszugeben und/oder das Abpumpen freizugeben oder nicht. Sie zeichnet sich dadurch aus, dass mindestens zwei Sensoren vorhanden sind, welche die Anwesenheit des Schwimmers in einem je einem Detektionsbereich entlang der Bahn detektieren, wobei die Detektionsbereiche von mindestens zwei der Sensoren (d.h. beider Sensoren, bzw. wenn mehr als zwei Sensoren vorhanden sind, von mindestens zweien davon) überlappen.

Dieser Ansatz macht sich die Erkenntnis zunutze, dass Sensoren mit einer in Relation zu den Wassertank-Füllständen von Getränkezubereitungsmaschinen durchaus signifikanten Reichweite existieren, und dass damit auf einfachste Weise die Anzahl von detektierbaren Sektoren (Füllstands-Bereichen) erhöht werden kann, ohne dass auch mehr Sensoren verwendet werden müssten. Dadurch, dass die Sensoren so angeordnet werden, dass sich ihre Bereiche überlappen, wird ausserdem sichergestellt, dass es keine Bereiche gibt, die zwischen den Detektionsbereichen liegen und in denen keine Detektion stattfindet, wodurch undefinierte Zustände möglich wären, bspw. indem unklar wäre, ob ein Benutzer bei ausgeschalteter Getränkezubereitungsmaschine Wasser aufgefüllt hat oder nicht.

Die Sensoren können in an sich bekannter Art als Reed-Sensoren (Reed-Schalter) ausgebildet sein, die mit einem Magneten zusammenwirken, wobei dann bevorzugt der Magnet am Schwimmer vorhanden ist. Die Sensoren sind bevorzugt separat vom Wassertank an der Getränkezubreitungsmaschine vorhanden und bspw. innerhalb deren Gehäuse angeordnet, d.h. sie verbleiben im oder am Hauptteil der Getränkezubereitungsmaschine wenn der Wassertank abgezogen wird. Diese Anordnung erlaubt es, nicht nur den Füllstand des Wassertanks zu detektieren, sondern auch zu erkennen, ob der Wassertank überhaupt vorhanden ist.

Andere Detektionsmechanismen als Reed-Sensoren, bspw. ebenfalls über magnetische Wechselwirkung (Hall-Sensoren oder ähnlich) oder kapazitive oder optische Sensoren sind nicht ausgeschlossen.

Die Steuerungseinheit kann beispielsweise eingerichtet sein, ein Warnsignal auszugeben und den Benutzer zum Befüllen aufzufordern, wenn der Wasserstand in einem bestimmten Bereich, bspw. dem Überlappbereich zwischen den beiden Detektionsbereichen ist, der dann einem Tanklevel "Reserve" entspricht. Ergänzend oder alternativ kann eine entsprechende Information (bspw. die noch zur Verfügung stehende Flüssigkeitsmenge, ausreichend für eine bestimmte Anzahl Tassen eines kleineren (Espresso oder ähnlich) oder grösseren (bspw. Kaffee) Getränks auf einem Display dargestellt werde. Zusätzlich oder als Alternative dazu kann die Steuerungseinheit eingerichtet sein, keine Getränkezubereitung mehr zuzulassen, wenn sich der Schwimmer in einem untersten Sektor befindet, bspw. wenn er nur noch vom untersten Sensor detektiert wird.

Es kann auch vorgesehen sein, dass die Auswahl von zur Verfügung stehenden Getränken von der Position des Schwimmers abhängig gemacht wird. Je nach Anordnung der Sensoreinheiten kann bspw. nur noch die Zubereitung von Espresso, nicht aber von grösseren Kaffeegetränken ("Lungo", "caffè crema", in der Schweiz "Kaffee Creme"), zugelassen werden, wenn der Schwimmer im Überlappbereich ist.

In einer Gruppe von Ausführungsformen ist der Überlappbereich vergleichsweise klein gehalten und entspricht zum Beispiel ungefähr dem Volumen eines Getränks, bspw. des grössten ausgebbaren Getränks, so dass die Füllmenge relativ genau definiert ist. In anderen Ausführungsformen kann der Überlappbereich so gross gewählt sein, dass auf jeden Fall noch mehrere Getränkezubereitungen möglich sind, wenn der Schwimmer in den Überlappbereich eintritt und bevor er aus diesem wieder austritt.

Der Verlauf der Bahn weist mindestens eine vertikale Komponente auf; insbesondere kann die Bahn vertikal verlaufen (was leicht, bspw. bis zu 30°, zur Vertikalen geneigte oder gebogene Verläufe der Bahn nicht ausschiesst), beispielsweise genau entlang der Vertikalen senkrecht zu einer Abstellfläche der Maschine. Die Bahn kann wie an sich bekannt durch einen Schacht gebildet sein, welcher mindestens unterseitig mit dem Restvolumen des Wassertanks kommuniziert. Auch andere Führungsmittel, die den Schwimmer auf einer Bahn halten, sind denkbar und an sich bekannt.

In einer Gruppe von Ausführungsformen sind die Sensoren so angeordnet, dass entlang der ganzen Bahn zwischen einer einem Maximalfüllstand entsprechenden Position und einer Position, welche eingenommen wird, wenn der Wassertank leer ist, immer mindestens einer der Sensoren die Anwesenheit des Schwimmers detektiert. Wenn die Sensoren nicht am Wassertank, sondern an der Maschine abgeordnet sind, dann kann gemäss diesen Ausführungsformen die Ansteuerungseinheit eingerichtet sein, festzustellen, dass der Wassertank nicht vorhanden ist, wenn keiner der Sensoren die Anwesenheit des Schwimmers in seinem Detektionsbereich detektiert. Auch das kann dem Benutzer entsprechend signalisiert werden und/oder eine Getränkezubereitung kann dann nicht gestartet werden.

Aus dem Stand der Technik ist zwar an sich bekannt, die An- und Abwesenheit des Wassertanks zu detektieren. Zu diesem Zweck werden jedoch im Allgemeinen speziell zu diesem Zweck vorgesehene Schalter (Micro-Switches) verwendet. Durch das Vorgehen gemäss der genannten Gruppe von Ausführungsformen kann auf einen solchen zusätzlichen Schalter und dessen entsprechende Ansteuerung optional auch verzichtet werden, was die Bauweise weiter vereinfacht.

Der Wassertank kann wie an sich bekannt transparent ausgestaltet sein. Alternativ kann er auch nicht-transparent sein. In Ausführungsformen ist der Wassertank nicht-transparent, weist jedoch ein sich über eine vertikale Distanz erstreckendes Sichtfenster auf, das dem Benutzer ermöglicht, den Wasserstand auch optisch wahrzunehmen.

Ein optionales Merkmal der Getränkezubereitungsmaschine betrifft die Beleuchtung. In Ausführungsformen ist ein Leuchtmittel - bspw. mindestens eine LED, das beinhaltet die Möglichkeit, eine Anordnung von mehreren LEDs zu verwenden - vorhanden, durch welches der Wassertank von innen beleuchtet wird. Ein solches Leuchtmittel kann insbesondere am Hauptteil der Getränkezubereitungsmaschine und oberhalb des Wassertanks angeordnet sein. In Ausführungsformen mit Sichtfenster nimmt der Benutzer aufgrund einer solchen Beleuchtung im Sichtfenster den Wasserstand besonders einfach wahr, und der Wassertank wirkt erst noch optisch ansprechend.

Das Leuchtmittel erleichtert ganz generell das Auslesen des Wasserstands und gibt dem Benutzer ausserdem einen einfach und bspw. auch auf Distanz wahrzunehmenden Hinweis darauf, dass die Getränkezubereitungsmaschine aktiv und unter Umständen auch bereit ist.

In Ausführungsformen kann das Leuchtmittel so angesteuert sein, dass es deaktiviert wird, sobald der Wassertank entfernt wird."

Es besteht auch die Möglichkeit, dass über das Leuchtmittel an den Benutzer ein (Warn-)Hinweis zum Füllstand ausgebeben wird. Beispielsweise kann bei der Verwendung von mehrfarbigen Leuchtmitteln (wie RGB-LEDs) die Farbe abhängig vom Sektor, in dem sich der Schwimmer befindet, angesteuert werden. So kann die Farbe bspw. von blau oder grün auf orange oder gelb wechseln, wenn der Schwimmer in den Überlappbereich gelangt, und auf rot, wenn er sich unterhalb des Überlappbereichs befindet und der Tank aufgefüllt werden muss. Auch bei einfarbigen (dazu werden hier auch weiss leuchtende Leuchtmittel gezählt) Leuchtmitteln kann ein entsprechender Warnhinweis erfolgen, bspw. durch blinken.

Ein weiterer Aspekt der Erfindung, der auch unabhängig vom vorstehend beschriebenen Konzept realisiert werden kann, betrifft die Ausgestaltung des Wassertanks. Wassertanks für Getränkezubereitungsmaschinen weisen oft im Boden einen Auslauf mit einem Ventil auf, welches beim Entfernen des Wassertanks von der Getränkezubereitungsmaschine automatisch, bspw. aufgrund der Wirkung einer Feder, geschlossen wird. Ist der Wassertank an der Getränkezubereitungsmaschine angebracht, greift ein Betätigungsvorsprung dieser in den Auslauf ein und hält dabei das Ventil offen. Wird der Wassertank an der Getränkezubereitungsmaschine angebracht, muss das durch eine vertikale Bewegung geschehen, mit welcher der Wassertank auf den Betätigungsvorsprung aufgesetzt wird. Die Notwendigkeit einer vertikalen Bewegung kann sich auch daraus ergeben, dass meist für ein effizientes Abdichten entweder am Wassertank oder am Hauptteil der Getränkezubereitungsmaschine oder an beiden ein in das jeweils andere Element eingreifender Stutzen vorhanden ist.

Die Notwendigkeit einer vertikalen Bewegung verunmöglicht jedoch Designs, bei denen der Wassertank optisch in die Getränkezubereitungsmaschine integriert ist und schubladenartig mit einer horizontalen Bewegung eingeschoben wird. Zu diesem Zweck wurden bereits Getränkezubereitungsmaschinen angeboten, bei welchen sich der Auslauf nicht unterseitig im Boden sondern rückseitig befindet, also in eine vertikale Wand eingelassen ist. Diese haben jedoch den Nachteil, dass Luft angesaugt wird, sobald der Wasserstand auf unterhalb der Oberseite des Auslaufs sinkt, so dass ein beträchtliches Volumenanteil des Wassers gar nicht genutzt werden kann.

Um dem zu begegnen, weist gemäss diesem weiteren Aspekt der Erfindung der Wassertank nebst einem in eine vertikale Wand eingelassenen Auslauf mit Auslaufventil im Boden im Bereich des Auslaufs eine Vertiefung auf. Diese reichg bis zu der vertikalen Wand, in welcher der Auslauf vorhanden ist, d.h. bis zum Auslauf hin.

Eine solche Vertiefung kann bspw. rinnenartig sein und eine Breite von etwas mehr als der Breite des Auslaufs aufweisen. Die Tiefe der Vertiefung kann bis auf eine eventuelle Anschrägung an ihrem Rand über ihre Länge konstant sein, oder sie kann zur vertikalen Wand hin zunehmen. Es ist auch möglich, dass sich die Vertiefung über eine ganze Ausdehnung des Wassertanks von einer Seite zur anderen erstreckt.

Durch diese Vertiefung kann sich der Auslauf in der vertikalen Wand (bei im Grundriss im Wesentlichen rechteckigen Ausgestaltungen des Wassertanks im Allgemeinen der als "Rückseite" bezeichneten Wand) weiter unten befinden als aus dem Stand der Technik bekannt. Auch wenn der Wassertank praktisch leer ist, wird die Vertiefung gefüllt sein, und Wasser kann abgepumpt werden bis der Füllstand die Höhe des Ventils erreicht hat. Es wird also ein tieferer Minimalfüllstand erwirkt.

Als ,vertikale' Wand wird hier eine Wand des Wassertanks bezeichnet, welche im Gebrauchszustand insofern vertikal orientiert ist, dass sie die Aufnahme des Auslaufs ermöglicht, welcher durch eine im Wesentlichen horizontale Bewegung an das Hauptteil der Getränkezubereitungsmaschine koppelbar ist. Beispielsweise kann ein Stutzen und/oder ein Ventil-Betätigungsvorsprung für den Auslauf im Wesentlichen horizontal sein. Es ist also nicht ausgeschlossen, dass die vertikale Wand zur Vertikalen geneigt und/oder gekrümmt ist.

Besonders günstig in Kombination mit dem vorstehend beschriebenen Konzept der überlappenden Sensor-Detektionsbereiche, insbesondere da dieses Konzept eine besonders gut integrierte Anordnung der Sensorik im Gehäuse der Getränkezubereitungsmaschine zusammen mit einer Anordnung des Schwimmers bspw. hinterseitig am Wassertank ermöglicht. Das wiederum passt besonders gut zu einem schubladenartig einschiebbaren Wassertank wie er durch die Lösung gemäss dem weiteren Aspekt der Erfindung realisierbar ist.

Wie erwähnt ist dieser weitere Aspekt jedoch auch unabhängig vom Konzept der überlappenden Sensor-Detektionsbereiche und auch unabhängig von der Füllstandsmessung als Ganzer realisierbar. Die Erfindung betrifft also auch eine Getränkezubereitungsmaschine mit einem Wassertank und mit einer Pumpe, um Wasser zwecks Zubereitung eines Getränks aus dem Wassertank abzupumpen, bei welcher der Wassertank einen Auslauf mit einem selbstschliessenden Ventil in einer vertikalen Wand aufweist, und bei welcher der Wassertank ferner im Bereich des Auslaufs im Boden im Bereich des Auslaufs eine bis zu der vertikalen Wand mit dem Auslauf - insbesondere bis zum Auslauf hin - reichende Vertiefung aufweist.

Weiter betrifft die Erfindung nach diesem weiteren Aspekt auch einen entsprechenden Wassertank für eine Getränkezubereitungsmaschine, welcher einen Boden und eine umlaufende vertikale Wand und ferner einen Auslauf mit einem selbstschliessenden Ventil in der vertikalen Wand aufweist, wobei der Wassertank ferner im Bereich des Auslaufs im Boden im Bereich des Auslaufs eine bis zu der vertikalen Wand mit dem Auslauf reichende, insbesondere rinnenartige Vertiefung aufweist.

Die Getränkezubereitungsmaschine kann insbesondere eine auf dem Portionskapselprinzip basierende Kaffeemaschine sein, beispielsweise mit horizontalem Brühmodul. Eine solche Maschine kann eine Brühkammer mit Anstechmitteln (Perforationsspitzen oder -kanten) zum Anstechen einer eingebrachten Portionskapsel aufweisen. Weiter ist oft unter der Brühkammer ein Kapselbehälter für verbrauchte Kaffeekapseln angeordnet. Es existieren auch Teemaschinen, die auf einem ähnlichen Prinzip beruhen, und für welche das erfindungsgemässe Vorgehen gleichermassen geeignet ist.

Ausführungsbeispiele der Erfindung werden nachfolgend anhand von Zeichnungen beschrieben. In den Zeichnungen bezeichnen gleiche Bezugszeichen gleiche oder analoge Elemente. Die Zeichnungen zeigen teilweise einander entsprechende Elemente von Figur zu Figur in unterschiedlichen Massstäben. Es zeigen:
- Fig. 1: eine Ansicht der Getränkezubereitungsmaschine;
- Fig. 2: ein Schema der Steuerung der Getränkezubereitungsmaschine;
- Fig. 3: schematisch einen Wassertank einer Getränkezubereitungsmaschine;
- Fig. 4a-4c: drei verschiedene Zustände einer Sensoreinheit;
- Fig. 5: einen entlang einer vertikalen Ebene geschnitten dargestellten Wassertank;
- Fig. 6: ein Detail des Wassertanks gemäss Fig. 5 an das Hauptteil der Getränkezubereitungsmaschine gekoppelt, ebenfalls entlang einer vertikalen Ebene geschnitten dargestellt; und
- Fig. 7: ein Detail des Wassertanks gemäss Fig. 5.

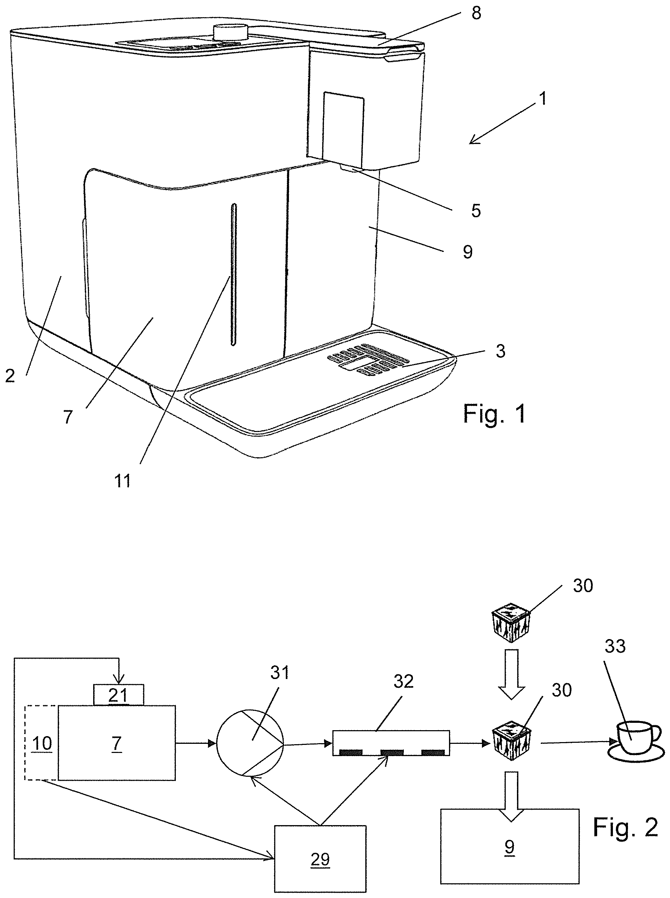

Die Getränkezubereitungsmaschine 1 gemäss **Figur 1** ist beispielsweise eine Portionskapsel-Kaffeemaschine der an sich bekannten Art mit horizontalem Brühmodul.

Sie weist nebst einem Gehäuse 2 eine Abstellfläche 3 für ein Trinkgefäss auf, hier mit Abtropfgitter und darunter liegendem (in der Figur abgedecktem) Auffangbehälter für Flüssigkeitstropfen. Über der Abstellfläche befindet sich ein Getränkeauslass 5 durch welchen ein Getränk, beispielsweise Kaffee, in das Trinkgefäss gelangt. Ein Wasserbehälter 7 ist im dargestellten Ausführungsbeispiel für das Befüllen und Reinigen nach vorne hin abziehbar. Daneben befindet sich ein Auffangbehälter 9 für gebrauchte Getränkekapseln. In diesen gelangt eine Kapsel, nachdem sie für den Brühprozess in die im Innern der Getränkezubereitungsmaschine angeordnete Brühkammer gelangt ist und nach dem Brühprozess nach unten fällt, wie das an sich für Getränkezubereitungsmaschinen mit horizontalem Brühmodul bekannt ist.

In Fig. 1 sieht man auch einen Bedienhebel 8, durch welchen die Brühkammer geöffnet werden kann, wobei im in den Figuren dargestellten heruntergeklappten Zustand des Bedienhebels gleich auch eine Einwurföffnung zum Einwerfen der Kapsel in die dann offene Brühkammer verdeckt wird.

**Figur 2** zeigt ein Schema der Getränkezubereitungsmaschine. Diese weist nebst dem Wassertank 7 eine Pumpe 31 zum Zuführen von Brühwasser zur Injektionsvorrichtung und ein Wassererhitzungsmittel 32 (bspw. einen Durchlauferhitzer) auf. Eine Portionskapsel 30, im gezeichneten Ausführungsbeispiel gemäss WO 2010/118543, wobei die Ausgestaltung der Kapsel jedoch keinen Einfluss auf das erfindungsgemässe Vorgehen hat, wird von oben in die Brühkammer eingeworfen, wo sie vom erhitzten, von der Pumpe geförderten Brühwasser durchströmt wird und sich aufgrund eines Extraktionsprozesses ein Brühgetränk ergibt, welches durch den Getränkeauslass in ein darunter auf der Abstellfläche abgestelltes Trinkgefäss 33 gelangt. Nach dem Brühprozess wird die Portionskapsel nach unten in den Auffangbehälter 9 ausgeworfen.

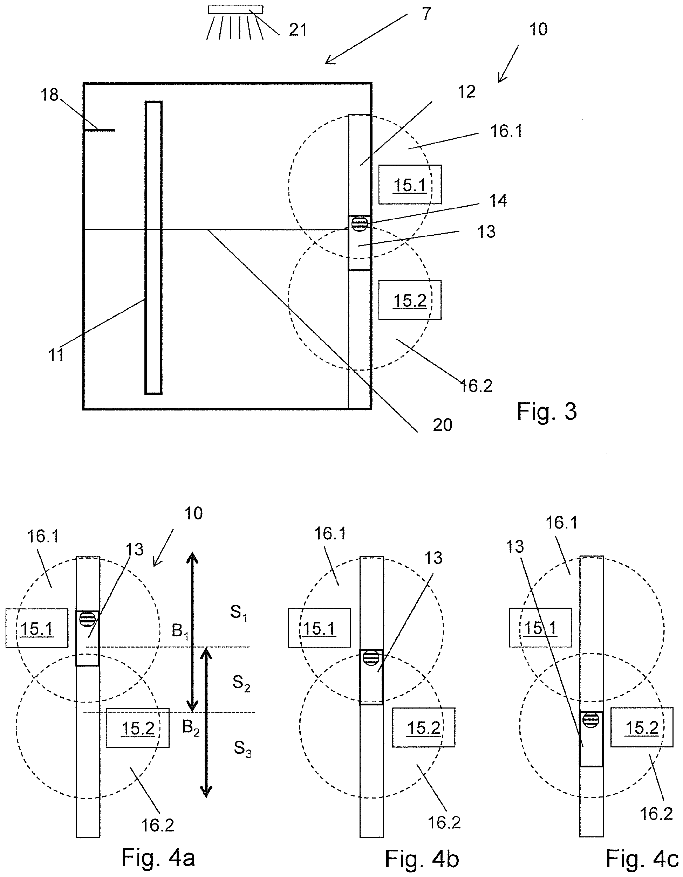

Die Getränkezubereitungsmaschine weist weiter eine Steuerungseinheit 29 auf, welche die Pumpe 31 und die Wassererhitzungsmittel 32 ansteuert. Dem Wassertank 7 ist eine nachstehend noch eingehender beschriebene Sensoreinheit 10 zugeordnet, welche Signale an die Steuerungseinheit abgibt. Die von der Sensoreinheit 10 zur Verfügung gestellten Signale enthalten Informationen über den Wasserstand, und diese können in die Steuerung einfliessen. Die Steuerungseinheit kann ausserdem ein Leuchtmittel 21, bspw. eine LED ansteuern, welches dem Wassertank zugeordnet ist. **Figur 3** zeigt schematisch den Wassertank 7 mit der Sensoreinheit 10. Der Wassertank ist als nach oben offenes, becherartiges Gefäss ausgebildet, ist im Wesentlichen nicht transparent und weist ein auch in Fig. 1 dargestelltes Sichtfenster 11 auf. Der ist bis zu einer den bevorzugten maximalen Füllstand darstellenden Markierung 18 mit Wasser befüllbar. Die Wasserstandslinie ist in der Figur mit dem Bezugszeichen 20 dargestellt.

Die Sensoreinheit weist ausserhalb des Wassertanks angeordnete Sensoren 15.1, 15.2 sowie einen im Innern des Wassertanks befindlichen Schwimmer 13 mit einem von den Sensoren detektierbaren Element auf. Im hier beschriebenen Ausführungsbeispiel sind die Sensoren Reed-Sensoren, und das detektierbare Element ist ein Permanentmagnet 14. Die Sensoren 15.1, 15.2 detektieren die Anwesenheit des Permanentmagneten 14 in je ihrem Detektionsgebiet 16.1 bzw. 16.2.

Der Schwimmer wird entlang einer vertikalen Bahn geführt, die bspw. durch einen mindestens unterseitig und optional über eine Schlitzung entlang dessen ganzer Höhe mit dem Restvolumen des Wassertanks 7 kommunizierenden Schacht 12 definiert ist. Andere Führungsmechanismen, bspw. nur seitlich und/oder an Kanten angreifende Führungsmittel sind möglich.

Oberseitig des Wassertanks ist ein aktives Leuchtmittel 21, nämlich eine LED angebracht. Dieses beleuchtet den Wassertank von innen.

Alternativ zur gezeichneten Ausführungsform kann der Wassertank einen schwenkbaren und/oder entfernbaren Deckel aufweisen. Für Ausführungsformen mit ausserhalb des Wassertanks angeordnetem Leuchtmittel kann dieser bspw. ein Sichtfenster oder eine Öffnung aufweisen, durch welchen hindurch beleuchtet wird. Es ist auch möglich ein Leuchtmittel im Deckel zu integrieren; dann können entsprechende elektrische Kontakte aussenseitig am Wassertank vorhanden sein.

**Figuren 4a bis 4c** illustrieren das Wirkprinzip der Sensoreinheit. Die Detektionsgebiete 16.1, 16.2 ergeben entlang der Bahn Detektionsbereiche B₁, B₂ (dargestellt durch Doppelpfeile), in denen der Permanentmagnet detektiert wird. Die Anordnung und Reichweiten der Sensoren 15.1,. 15.2 sind so gewählt, dass sich diese Detektionsbereiche B₁, B₂ überlappen. Daraus ergeben sich im dargestellten Ausführungsbeispiel mit zwei Sensoren drei Sektoren S₁, S₂, S₃. Es kann unterschieden werden, in welchem der drei Sektoren sich der Permanentmagnet des Schwimmers befindet, und damit können drei Wasserspiegel-Bereiche unterschieden werden:
- Wenn, wie in Figur 4a, sich der Wasserspiegel über einem bestimmten Niveau befindet, detektiert nur der erste Sensor 15.1 die Anwesenheit des Permanentmagneten. Der Schwimmer befindet sich nur im Detektionsbereich B₁ des ersten Sensors und also im obersten Sektor S₁.
- In einem mittleren Sektor S₂ (in diesem Text auch "Überlappbereich" genannt) ist, wie in Figur 4b dargestellt, der Permanentmagnet im Detektionsbereich B₁, B₂ sowohl des ersten als auch des zweiten Sensors.
- Figur 4c zeigt die Situation, in welcher der Permanentmagnet nur vom zweiten Sensor 15.2 detektiert wird, weil der Wasserspiegel entsprechend abgesenkt ist. Der Schwimmer befindet sich nur im Detektionsbereich B₂ des zweiten Sensors und also im untersten Sektor S₃.

Wenn der Wasserbehälter entfernt ist, detektiert keiner der beiden Schwimmer dessen Anwesenheit. Die Steuerungseinheit 29 erhält daher das Signal, dass kein Wasserbehälter vorhanden ist.

Die Verallgemeinerung auf mehr als zwei Sensorelemente, von mindestens zweier derer sich die Detektionsbereiche entlang der Bahn überlappen, ist ohne Weiteres möglich. Die maximal mögliche Anzahl von Sektoren beträgt 2*n*-1, wenn n die Anzahl Sensoren ist und wenn die Reichweiten der Sensoren ungefähr gleich sind.

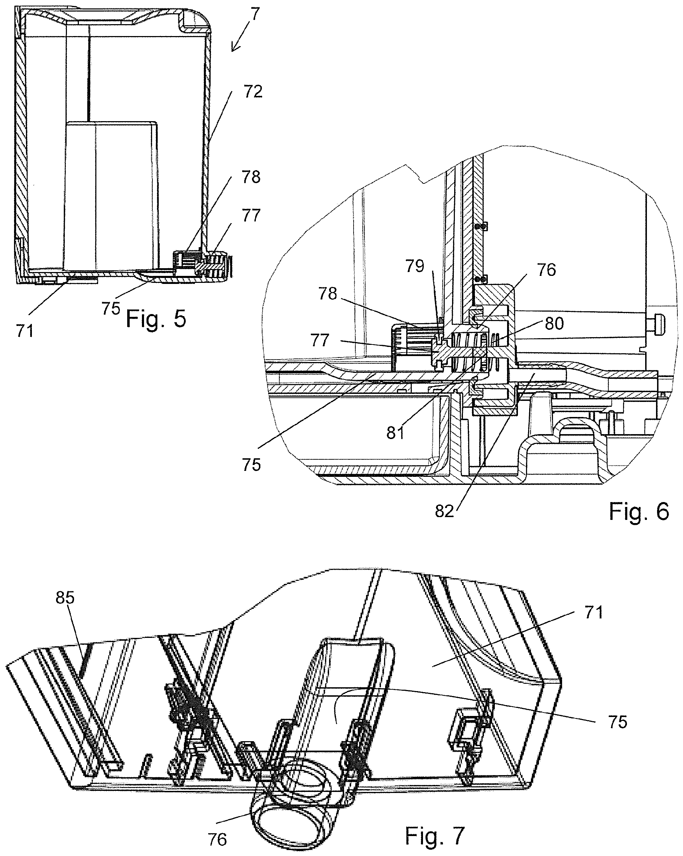

Der Wassertank 7 gemäss **Figuren 5-7** weist einen Tankkörper auf, welcher einen Tankboden 71 und eine umlaufende vertikale Wand 72 bildet. Im Boden ist eine Vertiefung 75 eingelassen, welche rinnenförmig ausgebildet ist und entlang des Bodens hin bis zur vertikalen Wand verläuft. Im Bereich dieser Vertiefung 75 weist der Wassertank einen Auslauf aus, der hier durch einen Stutzen 76 gebildet wird. Der Auslauf ist mit einem Ventil 77 versehen, welches eine Ventildichtung 79 aufweist, die durch eine Feder 80 dichtend gegen die Wand 72 gedrückt wird, wenn der Wassertank 7 entfernt wird. Beim Einsetzen drückt ein Betätigungsvorsprung 81 des Hauptteils das Ventil entgegen der von der Feder 80 ausgeübten Federkraft nach innen, und das Wasser kann durch den Auslauf über eine Pumpleitung 82 weggeführt werden. Im dargestellten Beispiel ist dem Ventil noch ein Filter 78 vorgeschaltet.

In Figuren 5-7 sieht man, dass der Auslauf mit dem Ventil aufgrund der Vertiefung 75 deutlich weiter unten angeordnet werden kann, als das bei einem ebenen Boden der Fall wäre. Daher kann der minimale Wasserstand - beispielsweise angezeigt durch eine entsprechende Markierung 85 (Fig. 7) - entsprechend tiefer sein.

Für das Einschieben des Wassertanks 7 kann am Gehäuse der Getränkezubereitungsmaschine im Bereich der Stellfläche, auf welchem der Wassertank-Boden 71 aufliegt, eine bis zur Frontseite reichende Rinne für die Vertiefung 75 vorhanden sein, damit das Einschieben mit einer ausschliesslich horizontalen Bewegung erfolgen kann. Alternativ kann beim Einschieben auch der Wassertank mit einer leichten Kippbewegung nach unten einrasten, wenn er eine der Vertiefung 75 entsprechende Aufnahmevertiefung im Gehäuse erreicht hat.

## Patentansprüche

1. Getränkezubereitungsmaschine mit einem Wassertank (7) und mit einer Pumpe (31), um Wasser zwecks Zubereitung eines Getränks aus dem Wassertank abzupumpen, sowie mit einem Schwimmer (13), welcher im Wassertank entlang einer Bahn bewegbar geführt ist und eine geringere Dichte als das Wasser aufweist, so dass seine Position entlang der Bahn von einem Füllstand im Wassertank abhängt, mit mindestens zwei Sensoren (15.1, 15.2), welche jeweils die Anwesenheit des Schwimmers (13) in einem Detektionsbereich entlang der Bahn detektieren, und ferner mit einer Steuerungseinheit (29), welche eingerichtet ist, abhängig von einer durch die Sensoren detektierten Position des Schwimmers ein Signal auszugeben und/oder das Abpumpen freizugeben oder nicht, **dadurch gekennzeichnet, dass** sich die Detektionsbereiche zweier der Sensoren (15.1, 15.2) überlappen.

2. Getränkezubereitungsmaschine nach Anspruch 1, wobei die Sensoren (15.1, 15.2) Reed-Sensoren sind und der Schwimmer einen Permanentmagneten (14) aufweist, der mit den Reed-Sensoren zusammenwirkt.

3. Getränkezubereitungsmaschine nach einem der vorangehenden Ansprüche, wobei die Sensoren (15.1, 15.2) so angeordnet sind, dass entlang der ganzen Bahn zwischen einer einem Maximalfüllstand entsprechenden Position und einer Position, welche eingenommen wird, wenn der Wassertank leer ist, immer mindestens einer der Sensoren die Anwesenheit des Schwimmers (13) detektiert.

4. Getränkezubereitungsmaschine nach Anspruch 3, wobei die Ansteuerungseinheit (29) eingerichtet ist, eine Abwesenheit des Wassertanks (7) festzustellen, wenn keiner der Sensoren die Anwesenheit des Schwimmers (13) in seinem Detektionsbereich detektiert.

5. Getränkezubereitungsmaschine nach einem der vorangehenden Ansprüche, aufweisend ein Leuchtmittel (21) zum Beleuchten des Wassertanks (7) von Innen.

6. Getränkezubereitungsmaschine nach Anspruch 5, wobei die Ansteuerungseinheit eingerichtet ist, das Leuchtmittel (21) abhängig von einem Resultat der Detektion durch die Sensoren (15.1, 15.2) anzusteuern.

7. Getränkezubereitungsmaschine nach Anspruch 4 und 6, wobei die Ansteuerungseinheit (29) eingerichtet ist, das Leuchtmittel (21) zu aktivieren, wenn mindestens einer der Sensoren (15.1, 15.2) die Anwesenheit des Schwimmers (13) detektiert, und andernfalls zu deaktivieren.

8. Getränkezubereitungsmaschine nach einem der vorangehenden Ansprüche, wobei der Wassertank (7) aus einem nicht transparenten Material gefertigt ist und ein sich entlang der Vertikale erstreckendes Sichtfenster (11) aufweist.

9. Getränkezubereitungsmaschine nach Anspruch 8, wobei das Sichtfenster (11) an einer von der Bahn verschiedenen Position angeordnet ist.

10. Getränkezubereitungsmaschine nach einem der vorangehenden Ansprüche, wobei die Steuerungseinheit (29) eingerichtet ist, abhängig von der Position des Schwimmers die Anzeige einer maximalen zur Verfügung stehende Anzahl von Getränken und/oder die Anpassung einer Auswahl von auswählbaren Getränken zu veranlassen.

11. Getränkezubereitungsmaschine nach einem der vorangehenden Ansprüche, wobei der Wassertank einen Auslauf mit einem selbstschliessenden Ventil in einer vertikalen Wand aufweist, und wobei der Wassertank ferner im Bereich des Auslaufs im Boden im Bereich des Auslaufs eine bis zu der vertikalen Wand mit dem Auslauf reichende Vertiefung aufweist.

12. Getränkezubereitungsmaschine nach einem der vorangehenden Ansprüche, aufweisend ein Wassererhitzungsmittel (32) sowie eine Brühkammer, die eingerichtet ist, eine Kapsel (30) mit einem Extraktionsgut als Portionspackung anzustechen und während eines Brühprozesses zu umfassen, derart, dass durch die Pumpe (31) aus dem Wassertank gefördertes, durch das Wassererhitzungsmittel (32) aufgeheiztes Wasser in die Kapsel und von dieser in einen Getränkeauslauf (5) gelangt.

## Claims

1. A drinks preparation machine with a water tank (7) and with a pump (31) in order to pump water out of the water tank for the purpose of preparing a drink, as well as with a float (13) which is movably guided in the water tank along a track and which has a lower density than the water, so that its position along the track depends on a filling level in the water tank, with at least two sensors (15.1, 15.2) which each detect the presence of the float (13) along the path in a detection region, and further with a control unit (29) which is configured to output a signal and/or to enable the pumping-out or not, depending on a position of the float which is detected by the sensors, **characterised in that** the detection regions of two of the sensors (15.1, 15.2) overlap.

2. A drinks preparation machine according to claim 1, wherein the sensors (15.1, 15.2) are reed sensors and the float comprises a permanent magnet (14) which interacts with the reed sensors.

3. A drinks preparation machine according to one of the preceding claims, wherein the sensors (15.1, 15.2) are arranged such that always at least one of the sensors detects the presence of the float (13) along the complete track between a position which corresponds to a maximal filling level and a position which is assumed when the water tank is empty.

4. A drinks preparation machine according to claim 3, wherein the activation unit (29) is configured to determine an absence of the water tank (7) if none of the sensors detects the presence of the float (13) in its detection region.

5. A drinks preparation machine according to one of the preceding claims, comprising a light means (21) for illuminating the water tank (7) from the inside

6. A drinks preparation machine according to claim 5, wherein the activation unit is configured to activate the light means (21) depending on a result of the detection by the sensors (15.1, 15.2).

7. A drinks preparation machine according to claim 4 and 6, wherein the activation unit (29) is configured to activate the light means (21) if at least one of the sensors (15.1, 15.2) detects the presence of the float (13), and to otherwise deactivate it

8. A drinks preparation machine according to one of the preceding claims, wherein the water tank (7) is manufactured of a non-transparent material and comprises a viewing window (11) which extends along the vertical.

9. A drinks preparation machine according to claim 8, wherein the viewing window (11) is arranged at a position which is different from the track.

10. A drinks preparation machine according to one of the preceding claims, wherein the control unit (29) is configured to initiate the display of a maximal number of drinks which is available and/or the adaption of a selection of selectable drinks, depending on the position of the float.

11. A drinks preparation machine according to one of the preceding claims, wherein the water tank comprises a run-out with a self-closing valve in a vertical wall, and wherein the water tank in the region of the run-out in the base moreover comprises a deepening which reaches up to the vertical wall with the run-out.

12. A drinks preparation machine according to one of the preceding claims, comprising water heating means (32) as well as a brewing chamber which is configured to pierce a capsule (30) with an extraction material as a portion package and to encompass it during the brewing process in a manner such that water which is delivered out of the water tank by the pump (31) and which is heated by the water heating means (32) gets into the capsule and from this into a drinks run-out (5).

## Revendications

1. Machine de préparation de boisson dotée
d'un réservoir d'eau (7) et d'une pompe (31) qui pompe de l'eau hors du réservoir d'eau pour préparer une boisson,
d'un flotteur (13) guidé à déplacement le long d'une piste dans le réservoir d'eau et dont la densité est inférieure à celle de l'eau de telle sorte que sa position sur la piste dépend du niveau de remplissage du réservoir d'eau,
d'au moins deux capteurs (15.1, 15.2) détectant chacun la présence du flotteur (13) dans une plage de détection le long de la piste et en outre
d'une unité de commande (29) conçue pour délivrer un signal et/ou lancer ou non le pompage en fonction de la position du flotteur détectée par les capteurs, **caractérisée en ce que**
les plages de détection de deux des capteurs (15.1, 15.2) se superposent.

2. Machine de préparation de boisson selon la revendication 1, dans laquelle les capteurs (15.1, 15.2) sont des capteurs de Reed et le flotteur présente des aimants permanents (14) qui coopèrent avec les capteurs de Reed.

3. Machine de préparation de boisson selon l'une des revendications précédentes, dans laquelle les capteurs (15.1, 15.2) sont disposés de telle sorte qu'au moins l'un des capteurs détecte toujours la présence du flotteur (13) le long de la totalité de la piste entre une position qui correspond au niveau de remplissage maximum et la position qu'il prend lorsque le réservoir d'eau est vide.

4. Machine de préparation de boisson selon la revendication 3, dans laquelle l'unité de commande (29) est conçue pour constater l'absence du réservoir (7) si aucun des capteurs ne détecte la présence du flotteur (13) dans sa plage de détection.

5. Machine de préparation de boisson selon l'une des revendications précédentes, présentant un moyen d'éclairage (21) qui éclaire le réservoir (7) de l'intérieur.

6. Machine de préparation de boisson selon la revendication 3, dans laquelle l'unité de commande est conçue pour commander le moyen d'éclairage (21) en fonction du résultat de la détection par les capteurs (15.1, 15.2).

7. Machine de préparation de boisson selon les revendications 4 et 6, dans laquelle l'unité de commande (29) est conçue pour activer le moyen d'éclairage (21) si au moins l'un des capteurs (15.1, 15.2) détecte la présence du flotteur (13) et le désactiver sinon.

8. Machine de préparation de boisson selon l'une des revendications précédentes, dans laquelle le réservoir (7) est réalisé en un matériau non transparent et présente une fenêtre d'observation (11) qui s'étend suivant une ligne verticale.

9. Machine de préparation de boisson selon la revendication 8, dans laquelle la fenêtre d'observation (11) est disposée en une position différente de celle de la piste.

10. Machine de préparation de boisson selon l'une des revendications précédentes, dans laquelle l'unité de commande (29) est conçue pour permettre l'affichage du nombre maximum de boissons disponible et/ou l'adaptation à la sélection des boissons disponibles en fonction de la position du flotteur.

11. Machine de préparation de boisson selon l'une des revendications précédentes, dans laquelle le réservoir d'eau présente dans une paroi verticale une sortie dotée d'une soupape à autofermeture, le réservoir d'eau présentant en outre au niveau de la sortie dans le fond un creux qui s'étend jusqu'à la paroi dotée de la sortie.

12. Machine de préparation de boisson selon l'une des revendications précédentes, présentant un moyen (32) de chauffage d'eau ainsi qu'une chambre d'infusion conçue pour perforer une capsule (30) contenant une dose de produit d'extraction et entourant cette dernière pendant une opération d'infusion de telle sorte que l'eau transportée hors du réservoir d'eau par la pompe (31) et chauffée par le moyen (32) de chauffage d'eau se rende dans la capsule et de cette dernière dans une sortie (5) de boisson.
